# EUROPEAN PATENT SPECIFICATION

(11) **EP 0 503 737 B1**
(45) Date of publication and mention of the grant of the patent: **31.01.1996**
(21) Application number: 92200670.5
(22) Date of filing: 10.03.1992
(51) Int. Cl.: F16L 19/06, F16L 33/22

(54) **Improved nipple joint**
Verbesserte Nippelverbindung
Joint à nipple amélioré

(30) Priority: 13.03.1991 IT MI910196 U
(43) Date of publication of application: 16.09.1992
(73) Proprietor: ROMANELLI, Antonio, I-80128 Napoli (IT)
(72) Inventor: ROMANELLI, Antonio, I-80128 Napoli (IT)
(74) Representative: Faraggiana, Vittorio, Dr. Ing.

(56) References cited:
- DE-C- 380 542
- FR-A- 2 398 958
- FR-A- 2 453 345
- GB-A- 1 126 267
- US-A- 2 044 335

## Description

In the art of nipple joints of yielding material nipples having a spigot on which is fitted the tube to be released by tightening a coaxial screw compression collar are known. To provide good fixing of the tube to the nipple it is of course necessary that the nipple be adequately dimensioned to receive the tube with precision. Such a necessity requires therefore the production of a considerable variety of nipples differing only in the dimensions of reception of the tube. It is accordingly clear that this translates into high production and storage costs, also forcing the user to acquire a large quantity of nipples to meet his requirements.

Another disadvantage of the known art is that if it is desired to replace a tube already installed with a tube of different diameter or thickness, in addition to the difficulty of unscrewing common to radial compression nipples of the known art, it would be necessary to completely replace the corresponding nipples with costs and times which this would involve. Finally, in nipples of the known art tightening and unscrewing are difficult because of the deformation required of elements in direct contact with the tightening ring nut, which produces considerable friction and probable jamming, at the same time reducing the seal of the nipple.

FR-A-2 398 958, DE-C-380 542, US-A-2 044 335, FR-A-2 453 345 and GB-A-1 126 267 are examples of known nipple joints, which produce the above mentioned problems and other disadvantages.

A general purpose of the present invention is to obviate the above mentioned shortcomings by providing a nipple easy to assemble and disassemble and with improved seal, in particular where uncontrolled torsional deformation forces in said elements designed for radial compression of the tube are avoided for more reliable seal of the whole.

In addition, the purpose of receiving pipes of different diameters is achieved merely by replacing adapting elements inside the nipple so that the main external body thereof is always the same.

In view of said purposes it has been sought to provide in accordance with the present invention a nipple as claimed in claim 1.

To further clarify the explanation of the innovative principles of the present invention and its advantages as compared with the known art there are described below with the aid of the annexed drawings possible embodiments as nonlimiting examples applying said principles. In the drawings -
FIG. 1 shows an exploded view of a nipple in accordance with the present invention,
FIG. 2 shows a longitudinal cross section of a nipple of Fig. 1 in a position of partial tightening,
FIG. 3 shows a longitudinal cross section of a nipple of Fig. 1 in a position of complete tightening,
FIG. 4 shows a longitudinal cross section of a nipple as in Fig. 3 but adapted to a tube of different diameter,
FIG. 5 shows a longitudinal cross section of another nipple in accordance with the present invention in a position of partial tightening,
FIG. 6 shows an enlarged view, partial and in longitudinal cross section of the nipple of Fig. 5 in a completely tightened position of.

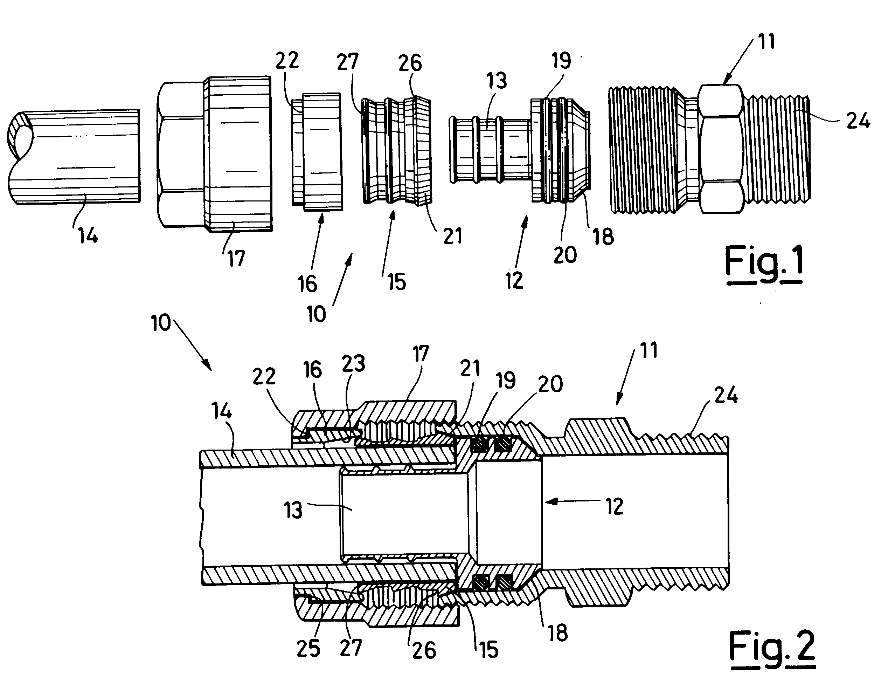

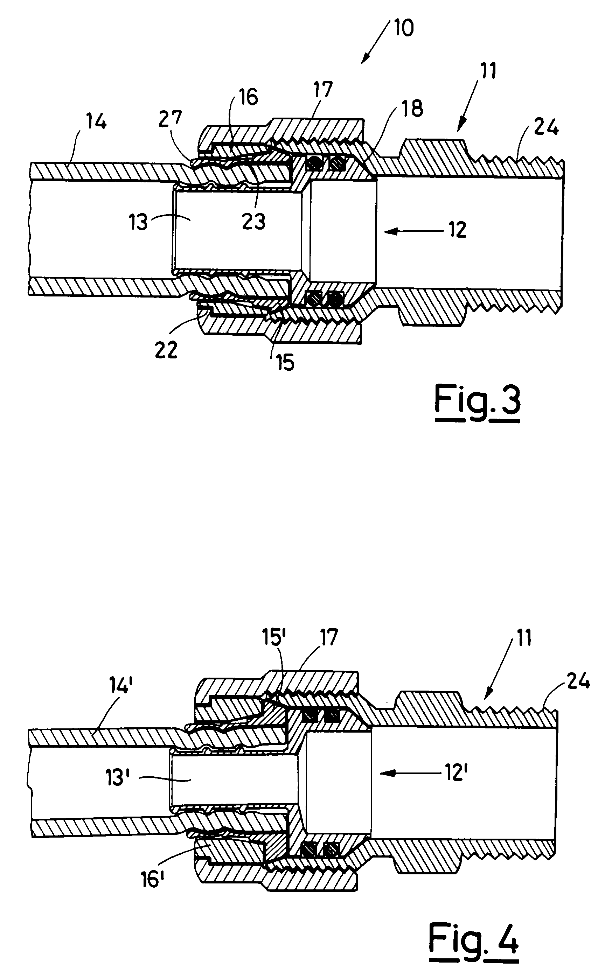

With reference to the figures, as shown in FIG. 1 a nipple, indicated generally by reference number 10, comprises in accordance with the present invention a base body 11, e.g. threaded at one end 24 for fixing of the nipple to a system, and at the other for screwing thereon a compression collar 17. As may be seen in FIGS. 2 and 3, inside the base body 11 is a spigot 13 ribbed and drilled axially for insertion in a yielding tube 14 to be jointed.

The spigot is advantageously but not necessarily provided in the form of an insert 12 with a truncated cone surface 18 for resting on a corresponding surface in the body 11 and comprises O-rings 19, 20 for sealing on the body 11.

Additional elements which can be received inside the nipple are a ribbed ring 15 for radial compression and an adapting bush 16. The ring 15 comprises a knurled truncated cone surface 21 which, as clarified below, adhering to a corresponding surface inside the base body, prevents reciprocal rotation. The adapting bush 16 has an external striking step 22 and an opposing internal inclined surface.

As shown in FIGS. 2 and 3, in the use of the nipple it suffices to fit in sequence on the tube 14 the collar 17, the bush 16 and the ring 15 and then fit the tube on the spigot 13 inserted in turn in the seat of the base 11.

Then initiating screwing down of the collar 17, the nipple elements take the position shown in FIG. 2. As seen in said FIG., the step 22 of the bush 16 butts against a radial edge 25 inside the mouth of the collar 17 while the ring 15 has an end edge which is inserted against the inclined surface 23 in the bush 16.

Proceeding to screw down the collar 17, the ring 15 of relatively yielding material such as annealed brass is inserted more and more into the bush 16, deforming radially to compress the tube on the spigot 13. The knurlings 21 prevent rotation of the ring while preserving the tube from twisting upon rotation of the collar. In addition, the bush 16 constitutes a sliding surface between the collar 17 and the ring 15 so as to diminish the force necessary for screwing down and unscrewing the collar and prevent torsional deformations in the ring 15 which would endanger correct compression of the tube.

As shown in FIG. 3, upon complete screwing down, the collar 17 pushes the bush 16 against a step 26 in the ring so that the latter in turn holds firmly in its seat the insert 12. The circumferential ribs on the spigot and on the ring are staggered so as to compress the end of the tube in a sinuous path, ensuring in this manner sealing and resistance to withdrawing traction of the tube. The peripheral continuity of the ring 15 ensures a substantially uniform circumferential compression of the tube while supplying a nipple with improved seal as compared with the known art.

Again advantageously, the length of the ring is such that its end edge 27 projects slightly from the mouth of the collar only when said collar is completely tightened. In this manner, the installer of the nipple realizes immediately the correct fixing of the tube.-To make this even more obvious, the edge 27 can be painted with a bright colour contrasting strongly with the colour of the collar.

It is now understandable that the diameter and thickness of the tube which can be received in the nipple depends on the dimensions of the insert 12, the ring 15 and the bush 16 while the base 11 and the collar 17 limit only the maximum diameter of the tube. As clearly shown in FIG. 4, it is then possible to connect to said base nipple 11 and collar 17 a tube 14' of a different diameter, e.g. smaller, merely by replacing the insert 12, the ring 15 and the bush 16 of FIG. 3 with an insert 12', a ring 15' and a bush 16' of different and suitable radial dimensions so that the tube 14' fits perfectly on the spigot 13' and is embraced with minimal play by the ring 15' in the same manner as for the tube 14 with the ring 15 and the spigot 13.

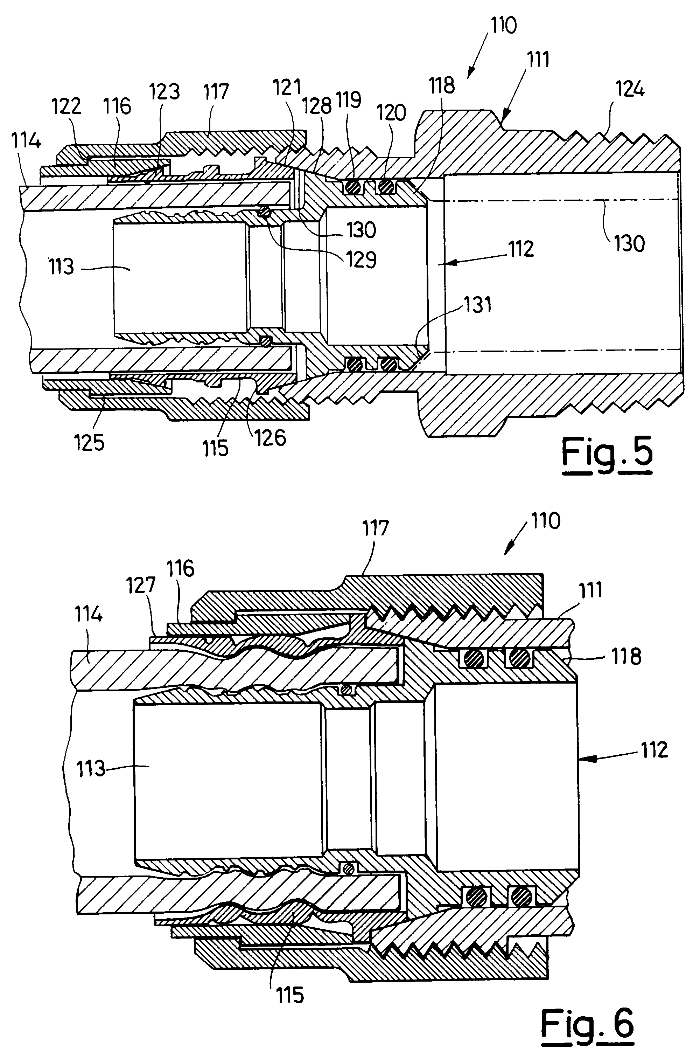

In FIGS. 5 and 6 is shown a possible variation of the nipple of FIG. 1. Elements similar to the element of the nipple of FIG. 1 are indicated below by the same reference numbers preceded by the cipher 1.

The nipple 110 of FIG. 5 is substantially similar to the nipples described above, comprising a base body 111 threaded at one end 124 for fixing to a system and at the other end to receive in a screwed manner a compression collar 117. Inside the base body 111 is inserted an insert 112 with sealing O-ring 19, 120. The insert 112 has a spigot 113 ribbed and axially drilled to receive a tube 114 to be jointed while a compression ring 115 is fitted externally on the tube to be deformed upon screwing down of the collar 117 by the sliding on an inclined surface 123 of an adapting bush 116 with a striking step 122 against a step 125 of the collar. To facilitate radial deformation of the ring 115 it is ribbed as shown in FIG. 5 and comprises a knurled truncated cone surface 121 which prevents rotation in relation to the body 111 on which it rests opposite a tapered surface 130.

Differently from the nipple of FIG. 1, the insert 112 has both a terminal external truncated cone surface 118 and an intermediate external truncated cone surface 128. In this manner, all the other elements of the nipple being unchanged, it is possible to have a body with smaller diameter at 124, similar to the body 11 of FIG. 1, with an internal passage conformed as shown in broken lines at 130 or a body 111 with larger diameter at 124 as shown in broken lines in FIG. 5. In the former case the insert rests with its tapered surface 118 on a complementary tapered surface 131 of the body. In the latter case the insert rests on the body 111 opposite the surface 130 thereof by means of its own intermediate surface 128. It is clear that this solution allows a considerable saving and the use of identical elements on base bodies with different diameters.

On the spigot 113 is preferably applied an O-ring 129 to ensure sealing even with tubes 114 of material or yielding, as with plastic or metal tubes, not otherwise providing perfect watertightness by the mere contact between tube wall and the wall of the spigot 113.

As shown in FIG. 6, upon complete screwing down of the collar 117 pushes the bush 116 against a step 126 of the ring 115 so that the latter in turn holds the insert 112 firmly in its seat. The circumferential ribs on the spigot and the ring are staggered so as to compress the end of the tube in a sinuous path and thus ensure sealing, thanks also to the O-ring 129, and the resistance to withdrawal traction of the tube.

Again advantageously, the length of the ring 127 is such that it projects slightly from the mouth of the collar upon complete tightening of the tube so as to indicate it.

As with the nipple in FIG. 1, it is clear that the diameter and thickness of the tube which can be received in the nipple depend on the dimensions of the insert 112, the ring 115 and the bush 116 while the base 111 and the collar 117 only limit the maximum diameter of the tube and it is then possible to connect to said base nipple 111 and collar 117 a tube of different diameter merely by using the appropriate insert, ring and bush.

Naturally the above description of an embodiment applying the innovative principles of the present invention is given merely by way of example and therefore is not to be taken as a limitation of the patent right claimed here.

For example, the base 11, 111 can terminate with any connection means of the known art and not necessarily with a threading, shown here by way of example. In addition, if support between the surface 18 and the corresponding internal truncated cone surface inside the base is considered sufficient for sealing, the seals 19, 20 or 119, 120 can be omitted. Finally, if interchangeability of the diameter of the tube is not considered necessary but only the other advantages of the invention, such as the ease of screwing down, the spigot can be provided in a single piece with the base body.

## Claims

1. Nipple (10,110) to receive the end of a tube (14,14',114) and having on a base body (11,111) a circumferentially ribbed spigot (13,13',113) on which the tube is fitted, a collar (17,117) screwing onto the base body coaxially with the spigot to produce radial compression of a ring (15,15',115) placed on the part of the tube fitted on the spigot (13,13',113) to compress and lock the tube between the ring (15,15',115) and the spigot (13,13',113) between the ring (15,15',115), and the collar (17,117) being a bush (16,16',116) for radial compression of the ring (15,15',115) on which acts the collar (17,117) for screwing down, characterized in that the ring (15, 15',115) has continuous cylindrical wall, the countinous cylindrical wall having circumferential ribs for engaging the bush (16, 16', 116), upon screwing down the collar (17, 117) the ring (15, 15', 115) is deformed permanently in radial direction with a sinuous conformation, whereby a sinuous deformation path is made between ring (15, 15', 115) and spigot (13, 13', 113), the sinuous deformation path permanently engaging the tube (14, 14', 114) between ring (15, 15', 115) and spigot (13, 13', 113).

2. Nipple in accordance with claim 1 characterized in that the bush (16,16',116) comprises an internal truncated cone surface (23) pushed axially against said ring upon screwing down of the collar to furnish thereto a radial compression force component.

3. Nipple in accordance with claim 2 characterized in that said bush (16,16',116) has a striking step (22,122) against the collar (17,117) in the direction of screwing down thereof to form a thrust surface of the bush on the ring.

4. Nipple in accordance with claim 1 characterized in that said spigot (13,13',113) emerges from an insert (12,12',112) which is coupled to the base body (11,111) with a coupling portion received by a complementary seat in the base body.

5. Nipple in accordance with claim 4 characterized in that the coupling portion of the insert has a truncated cone terminal end (18,118).

6. Nipple in accordance with claim 4 characterized in that the coupling portion of the insert has a cylindrical side surface.

7. Nipple in accordance with claim 6 characterized in that the cylindrical side surface comprises grooves for receiving seal rings (19,20,119,120) in the complementary seat in the base body (11,111).

8. Nipple in accordance with claim 1 characterized in that the bush (16,16',116) has an end furnishing axial thrust to the ring (15,15',115) toward the inside of the nipple upon tightening of the collar.

9. Nipple in accordance with claim 4 characterized in that the ring (15,15',115) has an axial thrust striker of the insert (12,12',112) in its seat upon tightening of the collar.

10. Nipple in accordance with claim 1 characterized in that the ring (15,15',115) has an end (27,127) projecting from the collar upon complete tightening thereof.

11. Nipple in accordance with claim 4 characterized in that the coupling portion of the insert (112) has an intermediate truncated cone circumferential surface (128)

12. Nipple in accordance with claim 1 characterized in that the spigot (113) comprises a peripheral O-ring (129) providing circumferential seal on the inner surface of the tube fitted thereon.

13. Nipple in accordance with claim 5 characterized in that the portion of the truncated cone end (18,118) rests against a corresponding truncated cone surface in the base body (11,11',111)

14. Nipple in accordance with claim 11 characterized in that the intermediate truncated cone surface (128) rests against a corresponding truncated cone surface (130) in the base body.

15. Nipple in accordance with claim 1 characterized in that the base body (11,11',111) has near the screwing down position of the collar an internal truncated cone surface (130) for complementary reception of an externally truncated cone end (21,121) of the ring.

16. Nipple in accordance with claims 14 and 15 characterized in that the truncated cone surface (130) in the base body (111) supporting the intermediate truncated cone surface (128) is an extension of the complementary internal truncated cone receiving surface (130) of the externally truncated cone end (121) of the ring (115).

17. Nipple in accordance with claim 15 characterized in that the externally truncated cone end (21,121) of the ring has a knurled surface against its rotation on the receiving surface.

## Patentansprüche

1. Nippel (10, 110) zur Aufnahme des Endes eines Rohres (14, 14', 114), mit einem, an einem Grundkörper (11, 111) befestigten, in Umfangsrichtung gerippten Einpreßzapfen (13, 13', 113), auf den das Rohr gepaßt ist, einem Kragen (17, 117), der auf den Grundkörper koaxial mit dem Einpreßzapfen geschraubt wird, um eine radiale Kompression eines Ringes (15, 15', 115) zu erzeugen, der auf dem Teil des Rohres angebracht ist, das auf den Einpreßzapfen (13, 13', 113) gepaßt ist, um das Rohr zwischen dem Ring (15, 15', 115) und dem Einpreßzapfen (13, 13', 113) zu komprimieren und zu verriegeln, wobei zwischen dem Ring (15, 15', 115) und dem Kragen (17, 117) eine Buchse (16, 16', 116) für eine radiale Kompression des Rings (15, 15', 115) vorgesehen ist, auf den der Kragen (17, 117) zum Festschrauben einwirkt, dadurch gekennzeichnet, daß der Ring (15, 15', 115) eine kontinuierliche zylindrische Wand hat, wobei die kontinuierliche zylindrische Wand Rippen in Umfangsrichtung für einen Eingriff mit der Buchse (16, 16', 116) hat, wobei beim Festschrauben des Kragens (17, 117) der Ring (15, 15', 115) in der radialen Richtung in einer schlängelnden Form dauerhaft verformt wird, wodurch ein schlängelnder Verformungspfad zwischen dem Ring (15, 15', 115) und dem Einpreßzapfen (13, 13', 113) erzeugt wird, wobei der schlängelnde Verformungspfad mit dem Rohr (14, 14', 114) zwischen dem Ring (15, 15', 115) und dem Einpreßzapfen (13, 13', 113) dauerhaft in Eingriff ist.

2. Nippel nach Anspruch 1, dadurch gekennzeichnet, daß die Buchse (16, 16', 116) eine innere Kegelstumpffläche (23) aufweist, die gegen den Ring axial gedrückt wird, wenn der Kragen festgeschraubt wird, um hierauf eine Komponente einer radialen Kompressionskraft bereitzustellen.

3. Nippel nach Anspruch 2, dadurch gekennzeichnet, daß die Buchse (16, 16', 116) eine Anschlagsstufe (22, 122) gegen den Kragen (17, 117) in dessen Festschraubrichtung hat, um eine Schubfläche der Buchse auf dem Ring zu bilden.

4. Nippel nach Anspruch 1, dadurch gekennzeichnet, daß der Einpreßzapfen (13, 13', 113) aus einem Einschub (12, 12', 112) austritt, der mit dem Grundkörper (11, 111) mit einem Kopplungsäbschnitt gekoppelt ist, der in einem komplementären Sitz in dem Grundkörper aufgenommen ist.

5. Nippel nach Anspruch 4, dadurch gekennzeichnet, daß der Kopplungsabschnitt des Einschubs ein Kegelstumpf-Abschlußende (18, 118) hat.

6. Nippel nach Anspruch 4, dadurch gekennzeichnet, daß der Kopplungsabschnitt des Einschubs eine zylindrische Seitenfläche hat.

7. Nippel nach Anspruch 6, dadurch gekennzeichnet, daß die zylindrische Seitenfläche zur Aufnahme von Dichtungsringen (19, 20, 119, 120) in dem komplementären Sitz in dem Grundkörper (11, 111) Rillen aufweist.

8. Nippel nach Anspruch 1, dadurch gekennzeichnet, daß die Buchse (16, 16', 116) ein Ende hat, das einen axialen Schub auf den Ring (15, 15', 115) zum Innern des Nippels beim Spannen des Kragens erzeugt.

9. Nippel nach Anspruch 4, dadurch gekennzeichnet, daß der Ring (15, 15', 115) einen axialen Schubanschlag des Einschubs (12, 12', 112) in seinem sitz beim Spannen des Kragens hat.

10. Nippel nach Anspruch 1, dadurch gekennzeichnet, daß der Ring (15, 15', 115) ein Ende (27, 127) hat, das von dem Kragen bei dessen vollständigem Spannen hervorsteht.

11. Nippel nach Anspruch 4, dadurch gekennzeichnet, daß der Kopplungsabschnitt des Einschubs (112) eine dazwischenliegende, sich in Umfangsrichtung erstreckende Kegelstumpffläche (128) hat.

12. Nippel nach Anspruch 1, dadurch gekennzeichnet, daß der Einpreßzapfen (113) einen O-Ring (129) im Randbereich aufweist, der an der inneren Fläche des aufgepaßten Rohrs eine Abdichtung in Umfangsrichtung erzeugt.

13. Nippel nach Anspruch 5, dadurch gekennzeichnet, daß der Abschnitt des Kegelstumpfendes (18, 118) auf einer entsprechenden Kegelstumpffläche in dem Grundkörper (11, 11', 111) aufsitzt.

14. Nippel nach Anspruch 11, dadurch gekennzeichnet, daß die dazwischenliegende Kegelstumpffläche (128) auf einer entsprechenden Kegelstumpffäche (130) in dem Grundkörper aufsitzt.

15. Nippel nach Anspruch 1, dadurch gekennzeichnet, daß der Grundkörper (11, 11', 111) bei der Festschraubposition des Kragens eine innere Kegelstumpffläche (130) zur komplementären Aufnahme eines Außenkegelstumpfendes (21, 121) des Rings hat.

16. Nippel nach Anspruch 14 und 15, dadurch gekennzeichnet, daß die Kegelstumpffläche (130) in dem Grundkörper (111), welcher die dazwischenliegende Kegelstumpffläche (128) trägt, eine Erweiterung der komplementären Innenkegelstumpf-Aufnahmefläche (130) des Außenkegelstumpfendes (121) des Rings (115) ist.

17. Nippel nach Anspruch 15, dadurch gekennzeichnet, daß das Außenkegelstumpfende (21, 121) des Rings eine gerändelte Fläche gegen eine Drehung auf der Aufnahmefläche hat.

## Revendications

1. Manchon fileté (10, 110) destiné à recevoir l'extrémité d'un tube (14, 14', 114) ayant sur un corps de base (11, 111) un goujon nervuré circonférentiellement (13, 13', 113) sur lequel s'encastre le tube, un collier (17, 117) se vissant sur le corps de base coaxialement avec le goujon pour produire une compression radiale d'un anneau (15, 15', 115) placé sur la partie du tube encastré sur le goujon (13, 13', 113) pour comprimer et bloquer le tube entre l'anneau (15, 15', 115) et le goujon (13, 13', 113) entre l'anneau (15, 15', 115) et le collier (17, 117) une douille (16, 16', 116) étant prévue pour la compression radiale de l'anneau (15, 15', 115) sur lequel agit le collier (17, 117) pour le vissage de serrage, caractérisé en ce que l'anneau (15 15', 115) présente une paroi cylindrique continue, la paroi cylindrique continue ayant des nervures circonférentielles pour l'engagement de la douille (16, 16', 116), lors du vissage de serrage du collier (17, 117) l'anneau (15, 15', 115) est déformé de façon permanente dans la direction radiale avec une conformation sinueuse, de sorte que le trajet de déformation sinueuse s'effectue entre l'anneau (15, 15', 115) et le goujon (13, 13', 113), le tracé de déformation sinueuse s'engageant de façon permanente dans le tube (14, 14', 114) entre l'anneau (15, 15', 115) et le goujon (13, 13', 113).

2. Manchon fileté selon la revendication 1, caractérisé en ce que la douille (16, 16', 116) comprend une surface tronconique interne (23) poussée axialement contre l'anneau lors du vissage de serrage du collier pour y appliquer une composante de force de compression radiale.

3. Manchon fileté selon la revendication 2, caractérisé en ce que la douille (16, 16', 116) présente un gradin de percussion (22, 122) contre le collier (17, 117) dans la direction de vissage de serrage pour former une surface de butée de la douille sur l'anneau.

4. Manchon fileté selon la revendication 1, caractérisé en ce que le goujon (13, 13', 113) fait saillie à partir d'une pièce rapportée (12, 12', 112) qui est accouplée au corps de base (11, 111) avec une portion d'accouplement logée dans un siège complémentaire du corps de base.

5. Manchon fileté selon la revendication 4, caractérisé en ce que la portion d'accouplement de la pièce rapportée présente une extrémité tronconique terminale (18, 118).

6. Manchon fileté selon la revendication 4, caractérisé en ce que la portion d'accouplement de la pièce rapportée présente une surface latérale cylindrique.

7. Manchon fileté selon la revendication 6, caractérisé en ce que la surface latérale cylindrique comprend des gorges pour loger les anneaux d'étanchéite (19, 20, 119, 120) dans le siège complémentaire du corps de base (11, 111).

8. Manchon fileté selon la revendication 1, caractérisé en ce que le manchon (16, 16', 116) présente une extrémité fournissant uné butée axiale à l'anneau (15, 15', 115) en direction de l'intérieur du manchon fileté lors du serrage du collier.

9. Manchon fileté selon la revendication 4, caractérisé en ce que l'anneau (15, 15', 115) présente un percuteur de butée axiale de la pièce rapportée (12, 12', 112) dans son siège lors du serrage de collier.

10. Manchon fileté selon la revendication 1, caractérisé en ce que l'anneau (15, 15', 115) présente une extrémité (27, 127) faisant seillie à partir du collier lors de son serrage complet.

11. Manchon fileté selon la revendication 4, caractérisé en ce que la portion d'accouplement de la pièce rapportée (112) présente une surface circonférentielle tronconique intermédiaire (128).

12. Manchon fileté selon la revendication 1, caractérisé en ce que le goujon (113) comprend un joint torique périphérique (129) assurant une étanchéité circonférentielle sur la surface interne du tube encastré sur celui-ci.

13. Manchon fileté selon la revendication 5, caractérisé en ce que la portion de l'extrémité tronconique (18, 118) repose contre une surface tronconique correspondante du corps de base (11, 11', 111).

14. Manchon fileté selon la revendication 11, caractérisé en ce que la surface tronconique intermédiaire (128) repose contre une surface tronconique correspondante.(130) dans le corps de base.

15. Manchon fileté selon la revendication 1, caractérisé en ce que le corps de base (11, 11', 111) comporte à proximité de la position de vissage de serrage du collier une surface tronconique interne (130) pour la réception complémentaire d'une extrémité extérieurement tronconique (21, 121) de l'anneau.

16. Manchon fileté selon les revendications 14 et 15, caractérisé en ce que la surface tronconique (130) du corps de base (111) supportant la surface tronconique intermédiaire (128) est un prolongement de la surface de réception tronconique interne complémentaire (130) de l'extrémité extérieurement tronconique (121) de l'anneau (115).

17. Manchon fileté selon la revendication 15, caractérisé en ce que l'extrémité extérieurement tronconique (21, 121) de l'anneau présente une surface moletée opposée à sa rotation sur la surface de réception.
